# EUROPEAN PATENT APPLICATION

(11) **EP 3 081 918 A1**
(43) Date of publication of application: **19.10.2016**
(21) Application number: 14869822.8
(22) Date of filing: 04.12.2014
(51) Int. Cl.: G01N 3/32, G01N 19/00

(54) **COATING MATERIAL INSPECTION METHOD, INSPECTION APPARATUS, COATING MATERIAL MANUFACTURING METHOD, AND COATING MATERIAL**

(30) Priority: 09.12.2013 JP 2013254587
(71) Applicant: Dainippon Printing Co., Ltd., Shinjuku-ku Tokyo 162-8001 (JP)
(72) Inventor: WATANABE, Daisuke, Tokyo 162-8001 (JP); SHIRASAWA, Natsuki, Tokyo 162-8001 (JP); NISHIDA, Hisashi, Tokyo 162-8001 (JP)
(74) Representative: Müller-Boré & Partner Patentanwälte PartG mbB
(86) International application number: PCT/JP2014/082133
(87) International publication number: WO 2015/087777

(57) **Abstract**

An inspection method according to the present invention is an inspection method for inspecting the strength of a covering material, the method including the steps of preparing a first supporting member having a first installation surface and a second supporting member having a second installation surface, the second supporting member being disposed such that the second installation surface is adjacent to the first installation surface, directly or indirectly fixing the covering material to the first installation surface and the second installation surface in a state in which the covering material extends over both of the first installation surface and the second installation surface, and reciprocating the second supporting member relative to the first supporting member in a state in which the first installation surface and the second installation surface are adjacent to each other.

## Description

### Technical Field

The present invention relates to a method for inspecting a covering material, an inspection apparatus, a method for manufacturing a covering material, and a covering material.

### -Background Art

Conventionally, covering materials such as facing sheets (e.g. , wallpaper) and the like are used as interior finishing materials for houses to impart decorativeness to the interior space. Among the facing sheets, a foamed laminated sheet in which a foamed resin layer is laminated on a fibrous base material is widely used because it can impart useful functionality such as flexibility, a three-dimensional design, an ability to accommodate unevenness of a surface onto which the foamed fibrous sheet is installed, and a heat insulating property (e.g., Patent Literature 1).

For such wallpapers, a wide variety of strength test methods have been proposed. For example, there are cases where JIS K7128-3 is applied. In this method, tear strength is measured by pulling a test piece in a surface direction.

### Citation List

### Patent Literature

Patent Literature 1: JP 2000-255011A

### Summary of Invention

### Technical Problem

However, although the above-described inspection method enables inspection regarding the tensile strength of a covering material, depending on the mode of usage of the covering material, there are cases where shear strength is important. For example, the backing onto which a covering material is installed usually has a joint (boundary) between backing boards, and in the event of an earthquake, a plurality of backing boards are likely to move such that adjacent backing boards slide relative to each other, rather than moving in a direction away from each other. This is not limited to earthquakes, and when backing boards are subjected to an external force such as vibration, movement in the sliding direction is likely to occur, and thus, shear displacement along a joint portion of the backing boards acts on the covering material attached to the backing boards. However, the above-described inspection method cannot reproduce such shear displacement that is faithful to actual shear displacement, and it cannot be said that displacement occurring in the covering material attached to the backing boards is reproduced.

The present invention was made to address the above-described problem, and an object thereof is to provide an inspection method with which shear displacement can be applied to a covering material, an inspection apparatus, a method for manufacturing a covering material, and a covering material manufactured using this method.

### Solution to Problem

An inspection method according to the present invention is an inspection method for inspecting strength of a covering material, the method including the steps of preparing a first supporting member having a first installation surface and a second supporting member having a second installation surface, the second supporting member being disposed such that the second installation surface is adjacent to the first installation surface, directly or indirectly fixing the covering material to the first installation surface and the second installation surface in a state in which the covering material extends over both of the first installation surface and the second installation surface, and reciprocating the second supporting member relative to the first supporting member in a state in which the first installation surface and the second installation surface are adjacent to each other.

The inspection method according to the present invention. enables measurement of the durability of a covering material against displacement in a shear direction in the case where the covering material is attached to a plurality of supporting members that are adjacent to one another such that the covering material extends over the plurality of supporting members. That is to say, in this method, the first supporting member and the second supporting member are adjacent to each other, and after the covering material is directly or indirectly attached to these supporting members in such a manner as to extend over these supporting members, the second supporting member is reciprocated relative to the first supporting member. Thus, displacement in the shear direction can be applied to the covering material. Therefore, it is possible to inspect durability against displacement that reflects an actual situation under circumstances where a covering material is attached to a plurality of backing boards that are adjacent to one another such that the covering material extends over those backing boards.

Moreover, the inspection method according to the present invention also makes it possible to easily perform an inspection by, for example, using an inspection apparatus according to the present invention, which will be described later, without preparing a large-scale apparatus or performing measurement setup. Therefore, this inspection method is also useful in doing a demonstration of a product, for example, showing the durability of a covering material at the customer's premises.

It should be noted that the wording "adjacent to" as used in the present invention does not necessarily refer to a state in which the first installation surface and the second installation surface are in contact with each other, and a gap may be present between the two installation surfaces as long as the covering material can be subjected to shear displacement. Moreover, although "reciprocating motion" primarily means a reciprocating linear motion, movement in other directions, such as directions in which the two supporting members approach and separate from each other or a direction of vertical motion, may also be added to the reciprocating linear motion, and in that case, the reciprocating motion is not necessarily required to be a linear motion.

In the above-described inspection method, the arrangement of the first installation surface and the second installation surface is not particularly limited as long as the two installation surfaces are adjacent to each other. For example, if the first installation surface and the second installation surface are disposed so as to be coplanar, it is possible to perform an inspection that assumes a case where the covering material is attached to a plurality of backing boards that are disposed together forming a flat surface such that the covering material extends over those backing boards. In addition, the first installation surface and the second installation surface can also be disposed in such a manner as to form an angle therebetween. With this configuration, it is possible to perform an inspection that assumes a case where, for example, backing boards that are adjacent to each other are disposed in such a manner as to form an angle therebetween, and the covering material is attached to these backing boards so as to extend over these backing boards. Moreover, if the angle between the first installation surface and the second installation surface when the two installation surfaces are coplanar with each other is regarded as 180 degrees, this angle may be set to be smaller than 180 degrees or may be set to be larger than 180 degrees.

In the above-described inspection method, it is possible to set a moving distance in one direction of the reciprocating motion to be 0.1 to 20 mm.

In the above-described inspection method, it is possible to set a period of the reciprocating motion to be 0.1 to 10 seconds.

In the above-described inspection method, the inspection method may further include the step of fixing the covering material to surfaces of a first supporting base board and a second supporting base board that are adjacent to each other in a state in which the covering material extends over both of the two supporting base boards, wherein the covering material may be indirectly fixed to the installation surfaces by installing the first supporting base board and the second supporting base board on the first installation surface and the second installation surface, respectively. Generally, a covering material is used fixed to supporting base boards such as backing boards by a means such as an adhesive. Thus, with the above-described configuration, an inspection in a more realistic environment in which shear displacement is applied to the covering material via the supporting base boards, can be reproduced. Here, when installing the first supporting base board and the second supporting base board on the first installation surface and the second installation surface, respectively, it is preferable to fix the first supporting base board and the second supporting base board in a detachable manner.

It should be noted that the wording "adjacent to" as used in the present invention does not necessarily refer to a state in which the first supporting base board and the second supporting base board are in contact with each other, and a gap may be present between the two supporting base boards as long as the covering material can be subjected to shear displacement.

The above-described inspection method is particularly preferable in the case where a covering material constituted by a laminated body including a foamed resin body or a foamed resin layer is to be inspected. The laminated body including the foamed resin body or the foamed resin layer is widely used as a finishing material for an interior layer of houses, and inspection of the strength against displacement in the shear direction is greatly needed.

The above-described inspection method is particularly preferable in the case where a sheet body for use as the covering material is to be inspected. An example of this sheet body is a laminated sheet in which at least a resin layer is formed on one surface of a base material.

A method for manufacturing a covering material according to the present invention includes the steps of forming the covering material, collecting a portion of the formed covering material as a sample for inspection, inspecting strength of the collected sample using the inspection method according to any of the above-described aspects, and certifying the covering material from which the sample satisfying a predetermined degree of strength is collected as a product.

The "predetermined degree of strength" as used herein can be set as appropriate in accordance with the inspection conditions. For example, in the case where the appearance of the covering material is observed and the strength is evaluated based on rupture occurring in the covering material, a state in which covering material has completely ruptured and is split can be recognized as "not satisfying the predetermined degree of strength", and a minute rupture that is not problematic in terms of practical use, such as a rupture occurring at an end portion of the covering material, can be recognized as "satisfying the predetermined degree of strength".

In the case where the covering material is a laminated body including a foamed resin body or a foamed resin layer, the covering material forming step of the above-described manufacturing method is performed by forming the laminated body including the foamed resin body or the foamed resin layer by a means such as foaming a resin body containing a foaming agent or a laminated body including a foaming-agent-containing resin layer. Moreover, in the case where the covering material is a laminated sheet having at least a resin layer on one surface of a base material, the covering material forming step of the above-described manufacturing method is performed by forming at least the resin layer on one surface of the base material.

An inspection apparatus according to the present invention is an inspection apparatus for inspecting strength of a covering material, the inspection apparatus including a first supporting member having a first installation surface, a second supporting member having a second installation surface, the second supporting member being disposed such that the second installation surface is adjacent to the first installation surface, and a driving portion, wherein the driving portion is configured to reciprocate the second supporting member relative to the first supporting member in a state in which the first installation surface and the second installation surface are adjacent to each other, and the first installation surface and the second installation surface are configured such that the covering material is directly or indirectly fixed to the first installation surface and the second installation surface in a state in which the covering material extends over both of the first installation surface and the second installation surface.

In the above-described inspection apparatus, it is possible to dispose the first installation surface and the second installation surface so as to be coplanar.

In the above-described inspection apparatus, it is possible to employ a configuration in which the driving portion reciprocates the second supporting member.

In the above-described inspection apparatus, the driving portion may be capable of adjusting a distance for which the second supporting member is reciprocated.

In the above-described inspection apparatus, the driving portion may be capable of adjusting a period at which the second supporting member is reciprocated.

In the above-described inspection apparatus, it is possible to employ a configuration in which a range of the reciprocating motion of the second supporting member relative to the first supporting member is adjustable.

In the above-described inspection apparatus, the covering material may be fixed to surfaces of a first base board and a second base board that are adjacent to each other in a state in which the covering material extends over both of the two base boards, and the first installation surface and the second installation surface may be configured such that the first base board and the second base board are detachably fixed to the first installation surface and the second installation surface, respectively.

A first covering material according to the present invention is a covering material manufactured using the above-described manufacturing method.

A second covering material according to the present invention is a covering material having at least a resin layer on one surface of a base material, wherein when the covering material having a 40 mm × 40 mm square shape is inspected using the above-described inspection method under conditions that the first installation surface and the second installation surface are disposed so as to be coplanar, a moving distance in one direction of the reciprocating motion is 4 mm, a period of the reciprocating motion is 0. 5 seconds, and a time period for which the reciprocating motion is performed is 10 seconds, the covering material is not split. More preferably, the second covering material is a covering material in which the extent of rupture occurring in the resin layer when the inspection is performed under the above-described conditions is such that the rupture does not impair the design of the covering material, and even more preferably a covering material in which no rupture occurs in the resin layer. Moreover, a resin layer including at least a foamed resin layer can be preferably used as the above-described resin layer.

### Advantageous Effects of Invention

According to the present invention, it is possible to perform strength inspection in which displacement in a shear direction is applied to a covering material. Also, according to the present invention, it is possible to provide a covering material having excellent strength against displacement in the shear direction.

### Brief Description of Drawings

FIG. 1A is a plan view of a sample for inspection according to an embodiment of the present invention;
FIG. 1B is a front view of the sample for inspection in FIG. 1A;
FIG. 2 is a plan view showing an embodiment of an inspection apparatus according to the present invention;
FIG. 3 is a front view of the inspection apparatus in FIG. 2;
FIG. 4 is a side view of the inspection apparatus in FIG. 2;
FIG. 5A shows a range of movement of a second supporting member;
FIG. 5B shows a range of movement of the second supporting member;
FIG. 6A is a partial front view showing the sample for inspection and another example of the inspection apparatus;
FIG. 6B is a partial front view showing the sample for inspection and another example of the inspection apparatus;
FIG. 6C is a partial front view showing the sample for inspection and another example of the inspection apparatus;
FIG. 7 is a plan view showing another example of a movement direction of a supporting member;
FIG. 8 is a plan view showing another example of the movement direction of the supporting member;
FIG. 9 is a front view schematically showing a configuration of another example of the inspection apparatus;
FIG. 10 is a side view of the inspection apparatus in FIG. 9;
FIG. 11 is a plan view schematically showing a configuration of another example of the inspection apparatus; and
FIG. 12 is side view schematically showing a configuration of another example of the inspection apparatus.

### Description of Embodiments

Hereinafter, an embodiment of an apparatus and a method for inspecting a covering material according to the present invention will be described. The inspection apparatus and the inspection method inspect the strength of a covering material against displacement that acts on the covering material in a shear direction due to vibration or the like.

### 1. Covering Material

First, a covering material that is to be inspected will be described. A covering material according to the present invention is not particularly limited as long as it is used to cover an inner or outer wall surface of a building or the like, and examples of such covering material include wallpapers, tiles, and coats of paint. Here, a laminated sheet that is used as a wallpaper of a building will be described as an example of the covering material.

### 1-1. Laminated Structure

A laminated sheet according to the present embodiment has a laminated structure in which at least a resin layer is laminated on a base material. In this laminated sheet, it is preferable that the resin layer includes at least a foamed resin layer, and the laminated structure may also have one or more layers in addition to the foamed resin layer. For example, in order to improve the adhesion between the base material and the resin layer, a non-foamed resin layer B may be formed between the base material and the foamed resin layer as necessary.

Moreover, in addition to the foamed resin layer, this laminated sheet may also include at least one layer selected from a group consisting of the non-foamed resin layer B, a non-foamed resin layer A, a decorative pattern layer, and a surface protective layer, as a resin layer as necessary. That is to say, an example of the laminated structure of this laminated sheet is a laminated structure in which the base material/the non-foamed resin layer B/the foamed resin layer/the non-foamed resin layer A/the decorative pattern layer/the surface protective layer are laminated in this order.

Moreover, a surface of the laminated sheet on the opposite side to the base material may be provided with an uneven pattern by performing embossing or the like in order to impart a design to the surface.

Hereinafter, the composition of each of the layers constituting the laminated sheet of the present invention and methods for forming the individual layers will be described.

### 1-2. Base Material

A fibrous base material is preferably used as the base material, and usually, a fibrous base material used as paper for wallpaper can be used. The fibrous base material may contain a flame retardant, an inorganic agent, a dry paper strengthening agent, a wet paper strengthening agent, a coloring agent, a sizing agent, a fixing agent, and the like as necessary. Specific examples of the fibrous base material include general paper for wallpaper (paper obtained by sizing a sheet mainly composed of pulp with a sizing agent) and flame-retardant paper (paper obtained by treating a sheet mainly composed of pulp with a flame retardant such as guanidine sulfamate or guanidine phosphate) ; inorganic paper containing an inorganic additive such as aluminum hydroxide or magnesium hydroxide; high-quality paper; as well as thin paper, fiber-mixed paper (paper manufactured by mixing synthetic fiber and pulp), and the like. It should be noted that the fibrous base material used in the present invention also includes those classified as nonwoven fabric.

The grammage of the base material is not particularly limited, but may be about 50 to 300 g/m² and preferably about 50 to 120 g/m², for example.

### 1-3. Resin Layer

The resin layer is a layer that is provided on a top surface of the base material and that preferably includes at least the foamed resin layer. In the case where the resin layer is a layer including at least the foamed resin layer, the resin layer may have a single layer structure consisting only of the foamed resin layer or have a laminated structure including, in addition to the foamed resin layer, at least one layer selected from the group consisting of the non-foamed resin layer B, the non-foamed resin layer A, the decorative pattern layer, and the surface protective layer.

The mass per unit area of the resin layer and the density of each layer constituting the resin layer are set as appropriate in accordance with the type of the resin component used, the number of layers other than the foamed resin layer, and the like. From the viewpoint of achieving a sufficient degree of strength in the laminated sheet, it is desirable that the mass per unit area of the resin layer is 70 to 110 g/m² and preferably 72 to 100 g/m², and the density of the foamed resin layer included in the resin layer satisfies 0.1 to 0.3 g/cm³ and preferably 0.12 to 0.28 g/cm³.

The thickness of the resin layer is not particularly limited. Depending on the type of the resin component used, the number of layers other than the foamed resin layer, and the like, the thickness of the resin layer may be 70, to 700 µm and preferably 300 to 600 µm, for example.

### 1-3-1. Foamed Resin Layer

The foamed resin layer is formed by foaming a foaming-agent-containing resin layer containing a resin component and a foaming agent. Examples of the resin component used in the foamed resin layer include, but are not particularly limited to, polyolefin resins, vinyl chloride resins, and acrylic resins. From the viewpoint of achieving a sufficient degree of strength in the laminated sheet, it is preferable that the foamed resin layer contains at least one of 1) polyethylene and 2) an ethylene copolymer (hereinafter abbreviated to "ethylene copolymer") containing ethylene and a component other than α-olefins as monomers, as the resin component.

Polyethylene that is used as the resin component of the foamed resin layer may be a homopolymer of ethylene or may be a copolymer of ethylene and an α-olefin. The α-olefin that is used as a comonomer of this copolymer may be, for example, a linear or branched α-olefin having 3 to 20 carbon atoms and preferably 3 to 8 carbon atoms, although the number of carbons is set as appropriate in accordance with the density of the α-olefin in the polyolefin and the like.

A preferable example of the ethylene copolymer that is used as the resin component of the foamed resin layer is a copolymer of ethylene and at least one comonomer selected from the group consisting of carboxylic acid vinyl esters, α,β-unsaturated carboxylic acids, α,β-unsaturated carboxylic acid esters, and α,β-unsaturated carboxylic acid anhydrides. Specific examples of the carboxylic acid vinyl esters include vinyl acetate. Specific examples of the α,β-unsaturated carboxylic acids include a (meth)acrylic acid. Specific examples of the α,β-unsaturated carboxylic acid esters include methyl (meth)acrylate and ethyl (meth)acrylate. The α,β-unsaturated carboxylic acid anhydrides may be any of a mixed acid anhydride obtained by dehydration condensation of two different types of unsaturated carboxylic acids, a symmetrical acid anhydride obtained by dehydration condensation of two molecules of the same unsaturated carboxylic acid, and an intramolecular cyclic anhydride obtained by dehydration condensation of two carboxylic groups, and specific examples of the α,β-unsaturated carboxylic acid anhydrides include maleic anhydride, itaconic acid anhydride, and citraconic acid anhydride. It should be noted that " (meth) acrylic acid" as used in the present invention means acrylic acid or methacrylic acid, and this also holds true for the other portions in which " (meth) " is indicated.

The foaming agent that is used to form the foamed resin layer is not particularly limited and can be selected from known foaming agents. For example, organic heat-decomposable foaming agents such as azo-based foaming agents including azodicarbonamide (ADCA) and azobisformamide; and hydrazide-based foaming agents including oxybenzenesulfonyl hydrazide (OBSH) and paratoluenesulfonyl hydrazide; microcapsule-type foaming agents; as well as inorganic foaming agents such as sodium bicarbonate.

Moreover, for the purposes of imparting flame retardance, suppressing gaps between laminated sheets, enhancing surface characteristics, and so on, the foamed resin layer may also contain an inorganic filler and a pigment as necessary. Furthermore, as long as the strength of the foamed resin layer can be maintained, the foamed resin layer may also contain additives such as an antioxidant, a cross-linking agent, a cross-linking assistant, and a surface treating agent as necessary.

Moreover, in order for this laminated sheet to have strength against displacement in the shear direction, the foamed resin layer may be cross-linked as necessary. To cross-link the foamed resin layer, for example, the foaming-agent-containing resin layer that is not yet foamed can be subjected to a cross-linking treatment in advance, and then this foaming-agent-containing resin layer can be foamed. Examples of the method of this cross-linking treatment include electron beam cross-linking and chemical cross-linking. With regard to the conditions under which electron beam cross-linking is performed, specifically, a method in which electron beam irradiation treatment is performed at an acceleration voltage of 100 to 300 kV and preferably 100 to 200 kV with the irradiation dose being set to 10 to 100 kGy and preferably 30 to 60 kGy can be given as an example. Also, with regard to the conditions under which chemical cross-linking is performed, specifically, a method in which heat treatment of a foaming-agent-containing resin layer containing an organic peroxide such as dicumyl peroxide is performed at a temperature of about 160 to 180°C for a heating time of 5 to 10 minutes can be given as an example.

The thickness of the foamed resin layer is not particularly limited. From the viewpoint of achieving a sufficient degree of strength in the laminated sheet, the thickness of the foamed resin layer may be 300 to 800 µm, for example. The thickness of the foamed resin layer before being foamed (i.e., thickness of the foaming-agent-containing resin layer) may be 40 to 200 µm, for example.

The method for forming the foamed resin layer is not particularly limited. A method can be used in which the foaming-agent-containing resin layer is formed on the base material, or on the non-foamed resin layer B if the non-foamed resin layer B is provided, using preferably a method of forming the layer with melt-molding, more preferably a method of forming the layer with extrusion using a T-die extruder, or other methods, and then the foaming agent is foamed by heating.

### 1-3-2. Non-Foamed Resin Layer B (Adhesive Resin Layer)

The non-foamed resin layer B, which constitutes the resin layer, is an adhesive resin layer that is formed on a lower surface (surface coming into contact with the base material) of the foamed resin layer as necessary in order to improve the adhesion between the base material and the foamed resin layer.

The resin component of the non-foamed resin layer B is not particularly limited, and examples thereof include a polyolefin resin, a methacrylic resin, a thermoplastic polyester resin, a polyvinyl alcohol resin, and a fluororesin. From the viewpoint of achieving a sufficient degree of strength in the covering material, a polyolefin resin is preferable, and an ethylene-vinyl acetate copolymer (EVA) is more preferable. A known ethylene-vinyl acetate copolymer or a commercially available ethylene-vinyl acetate copolymer can be used as the ethylene-vinyl acetate copolymer. Although the ratio of the vinyl acetate component (VA component) in the ethylene-vinyl acetate copolymer that is used in the non-foamed resin layer B is not particularly limited, this ratio may be 10 to 46 mass% and preferably 15 to 41 mass%, for example.

The thickness of the non-foamed resin layer B is not particularly limited. For example, the thickness of the non-foamed resin layer B may be about 3 to 50 µm and more preferably about 3 to 20 µm.

The method for forming the non-foamed resin layer B is not particularly limited. For example, preferably a method of forming the layer with melt-molding and more preferably a method of forming the layer by using extrusion with a T-die extruder may be used. In particular, it is preferable to form the foaming-agent-containing resin layer and the non-foamed resin layer B with coextrusion using a multi-manifold T-die that is capable of simultaneously forming two or more layers by simultaneously extruding molten resins. Moreover, a method may also be used in which the non-foamed resin layer B is formed on the base material by a means such as coating, and the foamed resin layer or the foaming-agent-containing resin layer is then joined to the non-foamed resin layer B.

### 1-3-3. Non-Foamed Resin Layer A

The non-foamed resin layer A, which constitutes the resin layer, is a layer that is formed on an upper surface (surface on the opposite side to the base material) of the foamed resin layer as necessary in order to make the decorative pattern clear if a decorative pattern layer has been formed, or improve the scratch resistance of the foamed resin layer.

The resin component of the non-foamed resin layer A is not particularly limited, and examples thereof include a polyolefin resin, a methacrylic resin, a thermoplastic polyester resin, a polyvinyl alcohol resin, and a fluororesin. These resin components may be used alone or in a combination of two or more. Among these resin components, a polyolefin resin is preferable.

Specific examples of the polyolefin resin include polyethylene, polypropylene, polybutene, polybutadiene, polyisoprene, an ethylene-methyl acrylate copolymer, an ethylene-ethyl acrylate copolymer, an ethylene-(meth)acrylic acid copolymer, an ethylene-vinyl acetate copolymer, a saponified product of an ethylene-vinyl acetate copolymer, and an ionomer. Among these, from the viewpoint of achieving a sufficient degree of strength against the above-described displacement in the shear direction, polyethylene and an ethylene-(meth)acrylic acid copolymer are preferable, and low-density polyethylene and an ethylene-(meth)acrylic acid copolymer are more preferable.

The thickness of the non-foamed resin layer A is not particularly limited. For example, the thickness of the non-foamed resin layer A may be about 3 to 50 µm and more preferably about 3 to 20 µm.

The method for forming the non-foamed resin layer A is not particularly limited. Preferably, a method of forming the layer with melt-molding and more preferably a method of forming the layer with extrusion using a T-die extruder may be used. In particular, it is desirable to form the foaming-agent-containing resin layer and the non-foamed resin layer B with coextrusion using a multi-manifold T-die. Moreover, in the case where three layers, that is, the non-foamed resin layer A, the foamed resin layer, and the non-foamed resin layer B, are to be provided, it is desirable to form these three layers with coextrusion using a multi-manifold T-die that is capable of simultaneously forming three layers.

### 1-3-4. Decorative Pattern Layer

The decorative pattern layer, which constitutes the resin layer, is a layer that is formed on an upper surface of the foamed resin layer (or the non-foamed resin layer A) as necessary in order to impart a design to the laminated sheet.

Examples of the decorative pattern include a woodgrain pattern, a stone grain pattern, a sand grain pattern, a tiled pattern, a brick-masonry pattern, a cloth pattern, a leather tie-dyed pattern, a geometric figure, a letter, a symbol, and an abstract pattern. The decorative pattern can be selected as appropriate in accordance with the use of the laminated sheet.

The thickness of the decorative pattern layer is set as appropriate in accordance with the type of the decorative pattern and the like, and may be about 0.1 to 10 µm, for example.

### 1-3-5. Surface Protective Layer

The surface protective layer, which constitutes the resin layer, is a layer that is formed on an upper surface of the decorative pattern layer as necessary in order to impart stain resistance, adjust the sheen of the surface of the decorative pattern layer, protect the decorative pattern layer, and so on, if the decorative pattern layer is provided.

With regard to the resin component that is used to form the surface protective layer, an appropriate resin component can be selected from known resin components such as a thermoplastic resin and a curable resin from the viewpoint of achieving a sufficient degree of strength in the laminated sheet.

Examples of the thermoplastic resin that is used to form the surface protective layer include a polyolefin resin, an acrylic resin, a polyvinyl alcohol resin, and a fluororesin.

The type of curing reaction of the curable resin that is used to form the surface protective layer is not particularly limited. For example, any of a cold curing resin, a thermosetting resin, an ionizing radiation curable resin, a one-pack type curable resin, a two-pack type curable resin, an ionizing radiation curable resin, and the like may be used, but a one-pack type curable resin is preferable. As the curable resin, an acrylic resin, a urethane resin, and the like are preferable, and a one-pack type curable acrylic resin is more preferable. These curable resins may be used alone or in a combination of two or more. In the case where the curable resin is used to form the surface protective layer, in order to advance the curing reaction, a cross-linking agent, a polymerization initiator, a polymerization accelerator, and the like may also be used as necessary.

Moreover, the surface protective layer may be composed of a single layer or may be composed of two or more layers of the same type or different types, the layers being laminated one on top of another. For example, the surface protective layer may have a two-layer structure in which a layer formed of a curable resin is formed as the outermost layer, and a layer formed of a thermoplastic resin is laminated under this layer.

The thickness of the surface protective layer is not particularly limited, and may be 1 to 10 µm and preferably 1 to 5 µm, for example.

To form the surface protective layer, a method that is suitable for the type of resin component used can be employed. For example, in the case where the surface protective layer is formed using a thermoplastic resin, the surface protective layer may be formed by attaching a previously produced thermosetting resin film to the surface of the decorative pattern layer or may be formed by forming a film of thermoplastic resin on the surface of the decorative pattern layer. Moreover, in the case where the surface protective layer is formed using a curable resin, the surface protective layer is formed by applying a resin composition obtained by mixing a thermosetting resin, and various additives as necessary, to the foamed resin layer (or the non-foamed resin layer A or the decorative pattern layer) using a method such as gravure coating, bar coating, roll coating, reverse roll coating, or comma coating, and then drying and curing the resin composition by heating or the like, as necessary.

### 1-3-6. Uneven Pattern

In order to impart a design to this laminated sheet, the surface (surface on the opposite side to the fibrous base material) of the laminated sheet may be provided with an uneven pattern by embossing or the like, if necessary. The embossing can be performed by a known means such as pressing an embossing template against the surface. The uneven pattern is not particularly limited, and examples thereof include grooves like vessels of a woodgrain board, unevenness of the surface of a stone plate, a cloth surface texture, a satin finish, a sand grain texture, hairline finish, and parallel linear grooves.

### 1-4. Attachment Target

Covering materials including the laminated sheet that has been described in detail above can be attached to inner wall surfaces of various types of buildings. For example, the covering materials are attached to an interior finishing backing board (supporting base board). The type of material for such an interior finishing backing board is not particularly limited as well, and examples thereof include a gypsum board, plywood, and a metal plate.

Moreover, a covering material such as this laminated sheet can be attached to an interior finishing backing board under the same conditions as those of a method for attaching conventional wallpaper using an adhesive such as a starch-based gluing agent or a pressure-sensitive adhesive. Generally, a plurality of backing boards are installed adjacent to one another, and the covering material is attached to the backing boards in such a manner as to cover the entirety of these backing boards. Thus, the covering material is attached to the backing boards in such a manner as to cover joints between adjacent backing boards.

### 2. Preparation of Sample for Inspection

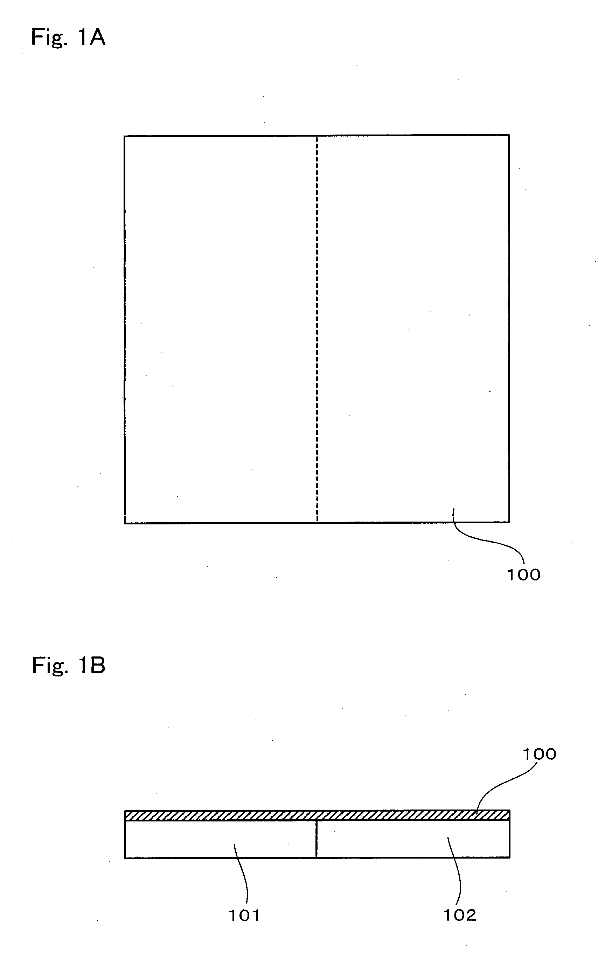

In an inspection method according to the present embodiment, the shear strength of the above-described covering material is inspected. First, after a covering material is formed as described above, a portion of the covering material is collected as a sample for inspection. At that time, although the covering material can be directly attached to an inspection apparatus, which will be described later, and inspected, the covering material can be attached to the above-described backing boards as shown in FIGS. 1A and 1B, for example, and in this state used as the sample for inspection. It should be noted that FIG. 1A is a plan view of the sample for inspection according to the present embodiment, and FIG. 1B is a front view of the sample in FIG. A.

In that case, first, a pair of backing boards formed in a rectangular shape are prepared and placed adjacent to each other. Then, as shown in FIGS. 1A and 1B, a covering material 100 described above is attached to both of backing boards 101 and 102 so as to extend over upper surfaces of the two backing boards. At this time, the covering material is cut to substantially the same size as the upper surfaces of the two adjacent backing boards, and attached to the upper surfaces of the two backing boards with an adhesive. However, the size of the covering material is not necessarily required to be the same as the size of the backing boards. The thus obtained sample is used to inspect the shear strength of the covering material with the inspection apparatus, which will be subsequently described. Hereinafter, the backing board disposed on the left side in FIGS. 1A and 1B will be referred to as the first backing board 101 and the backing board disposed on the right side the second backing board 102, for the convenience of description.

### 3. Inspection Apparatus

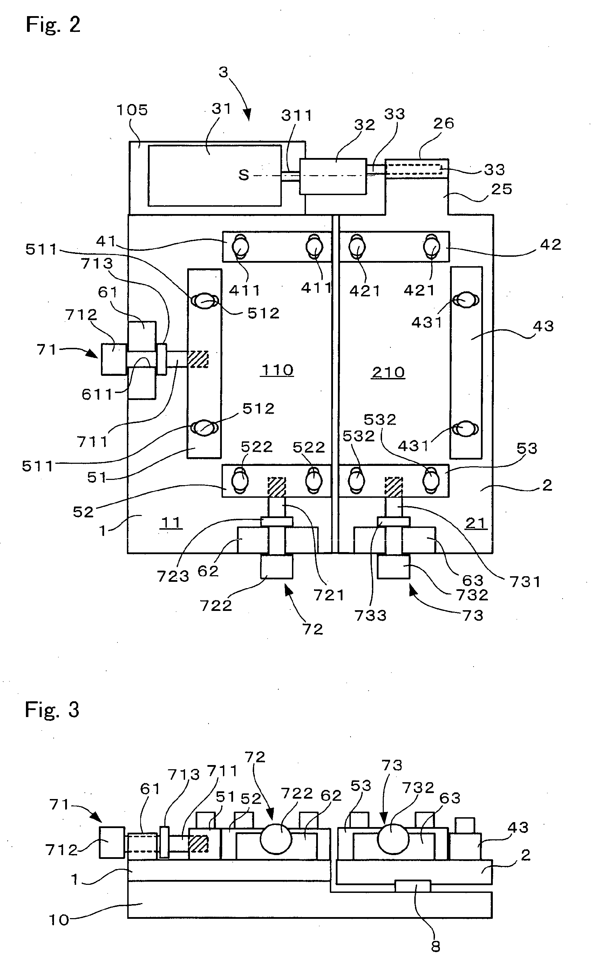

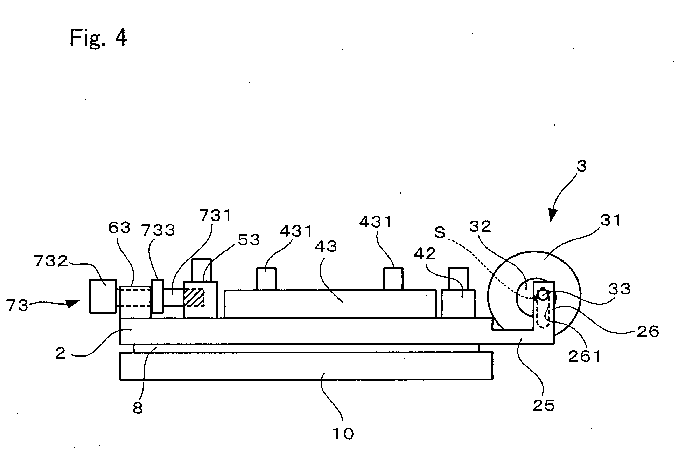

Next, an embodiment of an inspection apparatus for applying shear displacement to the above-described covering material will be described. FIG. 2 is a plan view of the inspection apparatus, FIG. 3 is a front view of the inspection apparatus in FIG. 2, and FIG. 4 is a side view of the inspection apparatus in FIG. 2. In the following description, for the convenience of description, the vertical direction in FIG. 2 may be referred to as "front and rear", the left-right direction in FIG. 2 as "left and right", and the direction of the paper plane in FIG. 2 as "vertical".

As shown in FIGS. 2 to 4, the inspection apparatus according to the present embodiment includes a plate-shaped base 10, and a first supporting member 1 and a second supporting member 2 are disposed on this base 10, the first and second supporting members 1 and 2 are formed in a rectangular plate shape. Moreover, a driving portion 3 that reciprocates the second supporting member 2 is mounted on the base 10.

The first supporting member 1 is formed into a rectangular shape and integrally fixed to the left side of the top of the base 10. An upper surface of the first supporting member 1 constitutes a first installation surface 11, to which the above-described first backing board 101 is fixed. For the fixation of the first backing board 101, the first installation surface 11 is provided with a first fixing mechanism. The first fixing mechanism includes a first fixing member 41 that has a rectangular parallelepiped shape and is disposed on a front end side of the first installation surface 11, a first pressing member 51 that has a rectangular parallelepiped shape and is disposed on a left side of the first installation surface 11, and a second pressing member 52 that has a rectangular parallelepiped shape and is disposed on a rear end side of the first installation surface 11. The first fixing member 41 is formed extending in the left-right direction and is fixed to the first installation surface 11 by bolts 411 inserted into two through-holes that are formed at left and right positions, respectively. Moreover, the through-holes are slots extending in the vertical direction, and thus the position of the first fixing member 41 with respect to the vertical direction can be changed by loosening the bolts 411.

The first pressing member 51 is formed into a rectangular parallelepiped shape extending in the front-rear direction. Two slot-like through-holes 511 extending in the left-right direction are formed at front and rear positions, respectively, of the first pressing member 51. Bolts 512 are inserted into the through-holes 511 and screwed into the first installation surface 11. Thus, the first pressing member 51 can be moved in the left-right direction for a distance corresponding to the length of each through-hole 511 in the left-right direction.

Moreover, a first support 61 is mounted on a left-side end portion of the first supporting member 1. This first support 61 is formed in a rectangular parallelepiped shape, and a groove portion 611 extending in the left-right direction is formed in an upper surface of the first support 61. Moreover, a first operating member 71 extending in the left-right direction is supported by this groove portion 611. The first operating member 71 includes a rod-like main body portion 711 supported by the groove portion 611, and a cylindrical grip portion 712 is mounted to a portion of this main body portion 711 that protrudes leftward from the first support 61. Moreover, a cylindrical stopper 713 is mounted to an intermediate portion of the main body portion 711 with respect to an axial direction thereof, and the grip portion 712 and the stopper 713 are arranged so as to sandwich the first support 61 therebetween. Both of the diameters of the grip portion 712 and the stopper 713 are larger than the inner diameter of the groove portion 611, thereby preventing the first operating member 71 from slipping out of the first support 61 in the left-right direction. Moreover, a male screw is formed at a leading end portion of the main body portion 711 on the right side, and engages with a female thread that is formed in an end surface of the first pressing member 51 on the left side. Thus, for example, when the grip portion 712 is held and rotated in such a direction that the male screw of the first operating member 71 disengages from the first pressing member 51, the first pressing member 51 moves rightward. When the first operating member 71 is rotated in the direction opposite to this direction, the first pressing member 51 moves leftward.

The second pressing member 52 is formed in a rectangular parallelepiped shape extending in the left-right direction, and has a configuration similar to that of the first pressing member 51. That is to say, the second pressing member 52 has two slot-like through-holes 521 extending in the front-rear direction at front and rear positions, respectively, and bolts 522 inserted into the respective through-holes 521 are screwed into the first installation surface 11. Thus, the second pressing member 52 can be moved in the front-rear direction for a distance corresponding to the length of each through-hole 521 in the front-rear direction.

Moreover, also the second pressing member 52 can be moved in the front-rear direction by a mechanism similar to that of the first pressing member 51. That is to say, a second support 62 is mounted on a rear end portion of the first supporting member 1. This second support 62 is formed in a rectangular parallelepiped shape, and a groove portion 621 extending in the front-rear direction is formed in an upper surface of the second support 62. A second operating member 72 extending in the front-rear direction is supported by this groove portion 621. The second operating member 72 has a configuration similar to that of the first operating member 71, and is constituted by a rod-like main body portion 721 supported by the groove portion 621, a cylindrical grip portion 722, and a cylindrical stopper 723. Moreover, a male screw at a front end portion of the main body portion 721 engages with a female thread that is formed in an end surface of the second pressing member 52 on the rear side, and thus, when the second operating member 72 is rotated, the second pressing member 52 moves in the front-rear direction.

The first backing board 101 is mounted on a rectangular first installation region 110 surrounded by the above-described first fixing member 41, first pressing member 51, and second pressing member 52. The first backing board 101 is positioned by its end surfaces being pressed against by the first pressing member 51 and the second pressing member 52.

Next, the second supporting member 2 will be described. First, a rail 8 extending in the front-rear direction is mounted on the right side of the base 10, and the second supporting member 2 is movably supported on this rail 8. That is to say, the second supporting member 2 is disposed on the right side of the base 10 so as to be adjacent to the first supporting member 1 with a minute gap left between the two supporting members, and can move in a straight line in the front-rear direction along the rail 8. Moreover, an upper surface of the second supporting member 2 constitutes a second installation surface 21, and its position in the vertical direction is set such that the second installation surface 21 is coplanar with the first installation surface 11. The second backing board 102 is fixed to this second installation surface 21.

The second installation surface 21 also is provided with a second fixing mechanism having a configuration similar to that of the first fixing mechanism. That is to say, the second fixing mechanism includes a second fixing member 42 that has a rectangular parallelepiped shaped and is disposed on a front end portion-side of the second installation surface 21, a third fixing member 43 that has a rectangular parallelepiped shape and is disposed on the right side of the second installation surface 21, and a third pressing member 53 that has a rectangular parallelepiped shape and is disposed on a rear end side of the second installation surface 21. The second fixing member 42 and the third fixing member 43 have configurations similar to that of the first fixing member 41, and extend in the left-right direction and the front-rear direction, respectively. Thus, the position of the second fixing member 42 in the front-rear direction and the position of the third fixing member 43 in the left-right direction can be changed.

Moreover, the third pressing member 53 has a configuration similar to that of the second pressing member 52, and extends in the left-right direction on the rear end portion of the second supporting member 2. Furthermore, a third support 63 and a third operating member 73 for moving the third pressing member 53 in the front-rear direction are also provided. The third support 63 and the third operating member 73 are configured in the same manner as the second support 62 and the second operating member 72. The third support 63 is mounted on the rear end portion of the second supporting member 2, and the third operating member 73 is supported by this third support 63.

The second backing board 102 is mounted on a rectangular second installation region 210 surrounded by the above-described second fixing member 42, third fixing member 43 , and third pressing member 53 , and is positioned with respect to the front-rear direction by being pressed against by the third pressing member 53. Moreover, this second installation region 210 forms a rectangular board installation region together with the first installation region 110 on the first installation surface 11.

Moreover, a protruding portion 25 protruding from the base 10 is formed at a front end portion of the second supporting member 2, and an engagement portion 26 into which a rod-like operating body 33, which will be described later, is inserted is integrally mounted to a leading end of this protruding portion 25. The engagement portion 26 is formed extending upward from the leading end of the protruding portion 25, and a through-hole 261 extending in the left-right direction is formed in the engagement portion 26. The through-hole 261 is a slot extending in a direction in which the engagement portion 26 extends, that is, the vertical direction.

Subsequently, the driving portion 3 will be described. A plate-shaped extended portion 105 is formed at the front end portion of the base 10, the extended portion 105 extending further forward than the first supporting member 1. A motor 31 is fixed to this extended portion 105. A rotating shaft 311 of this motor 31 extends rightward, and a cylindrical transmitting member 32 is mounted to an end portion of the rotating shaft 311. The rotating shaft 311 of the motor 31 is connected to a left end surface of the transmitting member 32 on an axis S. On the other hand, the above-described rod-like operating body 33 is mounted to a right end surface of the transmitting member 32 at a position offset from the axis S, and this operating body 33 is inserted into the through-hole 261 of the engagement portion 26. Thus, when the motor 31 rotates, the operating body 33 rotates in a circular motion at a position that is offset from the rotating shaft 311 of the motor 31 in an outward radial direction. As a result, the engagement portion 26 moves in the front-rear direction in accordance with the rotation of the operating body 33. It should be noted that since the through-hole 261 of the engagement portion 26 is a slot extending in the vertical direction, the vertical movement of the operating body 33 is accommodated by this slot, and only the front-rear motion of the operating body 33 is transmitted to the second supporting member 2 via the engagement portion 26 and the protruding portion 25.

It should be noted that the position of the operating body 33 on the transmitting member 32 is adjustable with respect to the radial direction, making it possible to change the radius of the circular motion of the operating body 33. As a result, the amplitude of the reciprocating motion of the second supporting member 2 is adjustable. Moreover, the motor 31 is provided with a controller (not shown) that controls the number of revolutions, and the period of reciprocating motion of the second supporting member 2 can be adjusted by adjusting the number of revolutions of the motor 31.

### 4. Method for Inspecting Covering Material

Subsequently, a method for inspecting the covering material 100 using the above-described inspection apparatus will be described. In this inspection, shear displacement is applied to the covering material 100 by reciprocating the second supporting member 2 of the inspection apparatus, and whether or not the covering material 100 ruptures is inspected. Generally, the covering material 100 is attached to backing boards in such a manner as to cover joints between adjacent backing boards. However, for example, when the backing boards are subjected to vibration due to an earthquake or the like, the backing boards are likely to vibrate in the vertical direction. Thus, adjacent backing boards move in the vertical direction along the joints. Accordingly, it is highly likely that shear displacement along the joints is applied to the covering material 100. For this reason, the inspection method according to the present embodiment reproduces such shear displacement that the covering material 100 is subjected to and inspects the effects on the covering material 100.

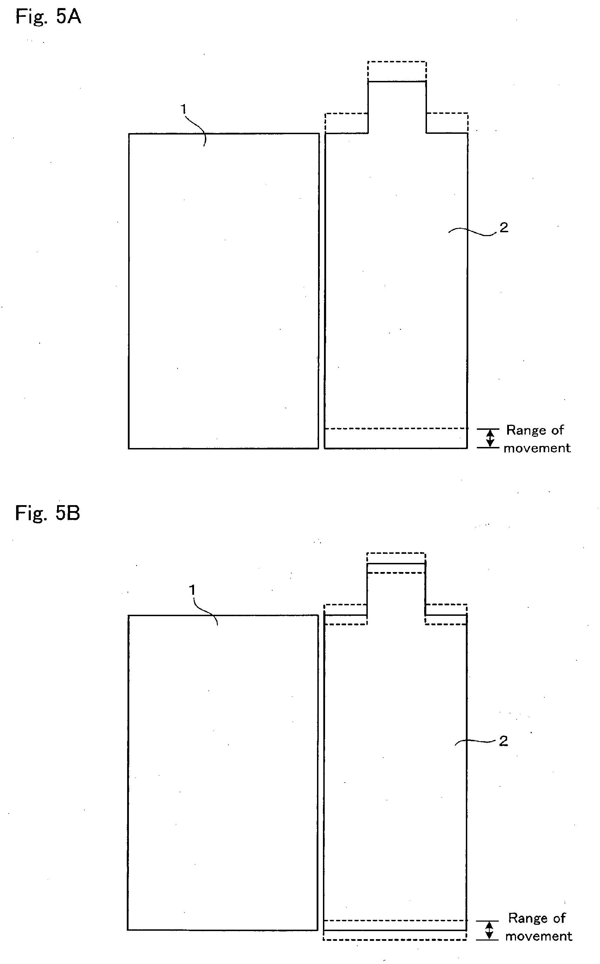

Prior to inspection, first, inspection conditions are determined in advance. Specifically, the inspection conditions are the moving distance of the second supporting member 2 for causing shear displacement, the period of the reciprocating motion, and the range of the reciprocating motion. The moving distance refers to the moving distance of the second supporting member 2 in one direction of the front-rear direction, and can be set between 0.1 and 20 mm, for example, if an earthquake is envisioned. Moreover, the period of the reciprocating motion refers to a period of time that is required for the second supporting member 2 to reciprocate one time, and can be set between 0.1 and 10 seconds, for example, if an earthquake is envisioned. Furthermore, the range of the reciprocating motion refers to a range in which the second supporting member 2 reciprocates relative to the first supporting member 1. For example, as shown in FIG. 5A, when rear end portions of the first supporting member 1 and the second supporting member 2 are aligned with each other, and from this position, the second supporting member 2 is reciprocated such that the second supporting member 2 is moved forward and then returned to the original position, setting is performed such that the covering material 100 is only subjected to forward shear displacement. On the other hand, as shown in FIG. 5B, when the rear end portions of the first supporting member 1 and the second supporting member 2 are aligned with each other, and this position is used as an intermediate point of the reciprocating motion, the reciprocating motion allows the second supporting member 2 to move forward and backward relative to the first supporting member 1. Thus, setting is performed such that the covering material 100 is subjected to forward and backward shear displacement. In order to set the range of the reciprocating motion, for example, the installation position of the second backing board is adjusted using the second fixing mechanism, and also the initial position of the transmitting member 32 during driving by the motor is changed by rotating the transmitting member 32.

After the inspection conditions are determined in this manner, the above-described sample is disposed in the board installation region. That is to say, the first backing board 101 is disposed in the first installation region 110, and the second backing board 102 is disposed in the second installation region 210. Then, these backing boards 101 and 102 are fixed to the installation region using the first and second fixing mechanisms. Subsequently, the motor 31 is driven to reciprocate the second supporting member 2. Thus, the second backing board 102 reciprocates in a state in which the second backing board 102 is adjacent to the first backing board 101. Therefore, a portion bonded to the second backing board 102, of the covering material 100 bonded to both of the two backing boards 101 and 102, performs reciprocating motion. Thus, shear displacement in a surface direction periodically occurs in the covering material 100 along the joint between the backing boards 101 and 102.

After shear displacement occurs in the covering material 100 in this manner for a predetermined period of time, the motor 31 is stopped. In this case, the driving time of the motor 31 can be set to 1 to 3600 seconds, for example. Then, the state of the covering material 100 is visually inspected. The criteria for judgment can be set as appropriate. For example, it is possible to set the following six-level criteria and certify covering materials that meet the levels. 1 to 5, more preferably 2 to 5, and even more preferably 3 to 5 as products that have excellent strength against shear displacement and that are thus permitted to be shipped.

0: The sample for inspection completely ruptures, and as a result, the covering material is split into two portions.
1: The rupture is obvious and impairs the design.
2: A slight rupture occurs at an end portion but is not problematic in terms of practical use.
3: Creases are obvious, but no rupture occurs.
4: Creases are locally observed but do not significantly impair the design.
5: Hardly any change occurs in appearance when compared with that before the inspection.

It should be noted that in the case where a laminated sheet such as that described above is used as the covering material 100, if the laminated sheet, which has a laminated structure in which a resin layer is laminated on a base material as described above, is used as wallpaper, when the covering material is subjected to vibration due to an earthquake, for example, even if the base material ruptures, the appearance of the covering material is not damaged unless the resin layer ruptures. Accordingly, in such a case, it can be considered that the covering material has no problem as a product. Thus, even when the base material has ruptured, if the result of observation of the surface (surface on the resin layer side) is any of the levels 1 to 5, more preferably 2 to 5, and even more preferably 3 to 5 of the above-described criteria, the covering material can be certified as a product that is permitted to be shipped.

Moreover, as an inspection method, it is also possible to measure the time until a situation corresponding to the level 0 or 1 of the above-described criteria arises and use the measured time as the criteria for evaluation. For example, an inspection may be conducted under the conditions that the sample for inspection is a 40 mm × 40 mm square covering material, the moving distance in one direction of the reciprocating motion of the second supporting member 2 is 4 mm, and the period of the reciprocating motion is 0.5 seconds, and the covering material can be judged as a covering material having excellent strength against shear displacement if no splitting has occurred, more preferably no rupture that impairs the design has occurred, and even more preferably no rupture has occurred in the covering material even after 10 seconds have elapsed after the start of the inspection. Thus, the covering material (production lot, etc.) from which such a sample is collected can be certified as a covering material that is permitted to be shipped as a product. In particular, a covering material having at least the resin layer on one surface of the base material and satisfying the above-described requirements is useful as an interior finishing material for houses.

### 5. Modifications

Although one embodiment of the present invention has been described above, the present invention is not limited to the foregoing embodiment, and various changes can be made thereto without departing from the gist of the present invention. It should be noted that modifications described below can be combined as appropriate. Moreover, the driving portion and the like may be not shown in the drawings, and their description may be omitted.

### 5-1

In the inspection apparatus according to the foregoing embodiment, the second supporting member 2 is reciprocated. However, the present invention is not limited to this, and it is sufficient if at least one of the first and second supporting members 1 and 2 is configured to reciprocate. That is to say, it is sufficient if the second supporting member 2 is configured to reciprocate relative to the first supporting member 1. Therefore, it is sufficient if the motor 31 drives either the first or second supporting member. Moreover, a configuration may also be adopted in which two motors 31 are prepared to drive both of the first and second supporting members.

### 5-2

In the inspection apparatus according to the foregoing embodiment, with respect to the configuration of the driving portion for reciprocating the second supporting member 2, the motor 31, the transmitting member 32, and the operating body 33 are provided. However, the present invention is not limited to this, and, for example, mechanisms such as a ball screw, a cylinder, and a linear actuator can also be used to reciprocate the second supporting member 2. Moreover, it is also possible to adopt a mechanism for manually reciprocating the second supporting member 2 without using electrical power. This point holds true for various modifications described below.

### 5-3

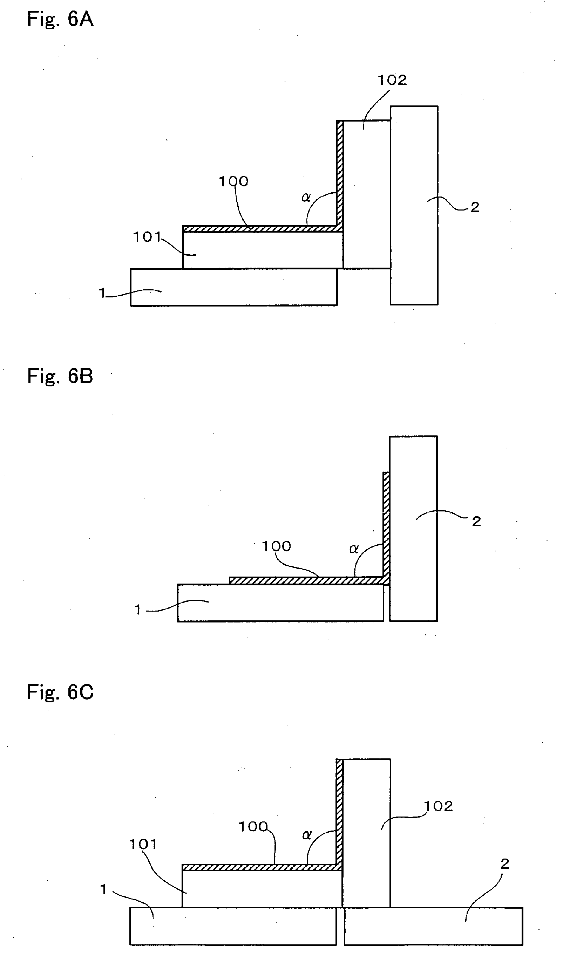

In the inspection apparatus according to the foregoing embodiment, the first supporting member 1 and the second supporting member 2 are positioned such that the first installation surface 11 and the second installation surface 21 are coplanar with each other. However, the first supporting member 1 and the second supporting member 2 may also be positioned otherwise. For example, as shown in FIGS. 6A and 6B, the first supporting member 1 and the second supporting member 2 can also be disposed such that the angle α between the two supporting members is 90 degrees, as long as the two installation surfaces 11 and 21 are adjacent to each other. In FIG. 6A, the backing boards 101 and 102 are arranged orthogonally to each other by disposing the second supporting member 2 orthogonally to the first supporting member 1 such that the right-side surface of the second backing board 102 is supported on the second supporting member 2, and the covering material 100 is attached to these backing boards 101 and 102 in a state in which the covering material 100 is bent at right angles. In FIG. 6B, although the second supporting member 2 is disposed orthogonally to the first supporting member 1, the covering material 100 is directly attached to the supporting members 1 and 2. The above-described arrangement of the installation surfaces 11 and 12 makes it possible to appropriately inspect shear displacement with respect to a covering material attached to an inner wall (internal corner) where adjacent backing boards meet at right angles. Moreover, even in the case where the installation surfaces 11 and 21 are coplanar with each other, an inspection to the same effect can be conducted by disposing the backing boards 101 and 102 orthogonally to each other as shown in FIG. 6C, for example. It should be noted that although the angle α between the supporting members or the backing boards is 90 degrees in the examples above, the angle α can also be changed as appropriate. For example, the angle α may be set to be smaller than 90 degrees or larger than 90 degrees, or even larger than 180 degrees. In this manner, the angle between the supporting members or the backing boards can be set in accordance with a possible installation situation of a covering material.

### 5-4

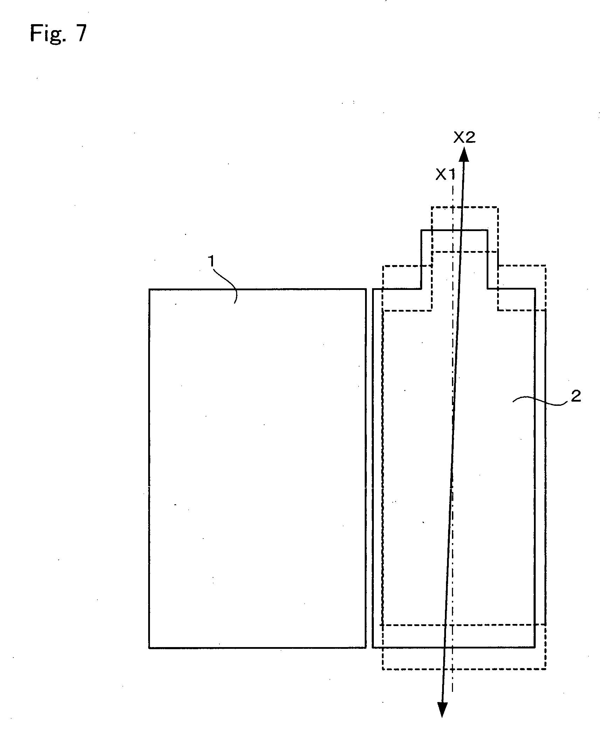

In the inspection apparatus according to the foregoing embodiment, the second supporting member 2 is configured to slide parallel to an end surface of the first supporting member 1. However, it is not necessarily required to move the second supporting member 2 parallel to the end surface of the first supporting member 1. For example, as shown in FIG. 7, in accordance with test conditions to be reproduced, a movement direction X2 of the second supporting member 2 can be inclined from a direction X1 that is parallel to the end surface of the first supporting member 1.

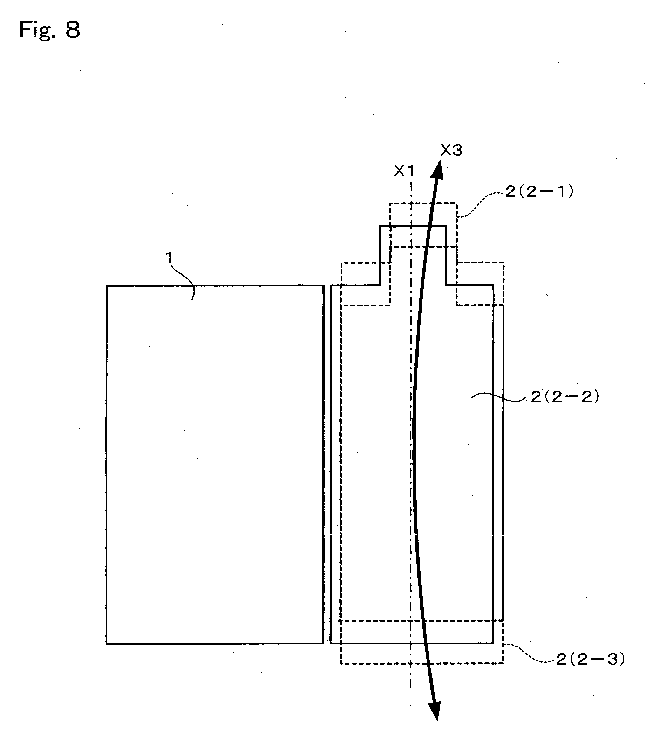

Moreover, it is not necessarily required to move the second supporting member 2 in a straight line. For example, as shown in FIG. 8, the second supporting member 2 can also be moved in a curved movement direction X3. In this example, during movement of the second supporting member 2 from the upper side to the lower side in FIG. 8, the second supporting member 2 approaches the first supporting member 1 (movement from 2-1 to 2-2) and then separates from the first supporting member 1 (movement from 2-2 to 2-3). In this case, the driving system for the second supporting member is not particularly limited; however, for example, a curved rail can be disposed on the base 10, and the second supporting member 2 can be reciprocatably disposed on this rail.

### 5-5

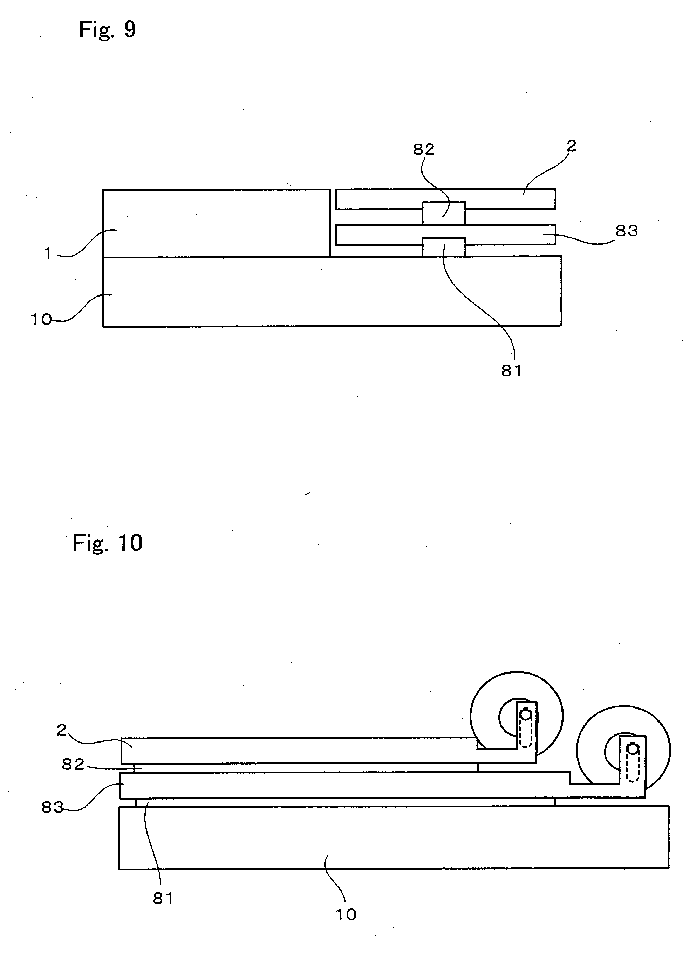

In the foregoing embodiment, the second supporting member 2 is configured to reciprocate on the base 10 to apply one type of displacement to the covering material 100. However, a configuration that applies more complex displacement to the covering material 100 can also be adopted. For example, as shown in FIGS. 9 and 10, a straight line-shaped first rail 81 extending parallel to the first supporting member 1 is provided on the base 10, and a plate-shaped movable member 83 is disposed on this first rail 81 so that the movable member 83 reciprocates on the first rail 81. With regard to the driving system for the movable member 83, although not shown in detail in the drawings, mechanisms, such as a motor, a transmitting member, an operating body, and an engagement portion, disposed on the base 10 can be used as described in the foregoing embodiment. In addition, a straight line-shaped second rail 82 extending parallel to the first supporting member 1 is further provided on an upper surface of the movable member 83, and the second supporting member 2 is disposed on this second rail 82 so that the second supporting member 2 reciprocates on the second rail 82. Although the second supporting member 2 is driven in the same manner as the movable member 83, a motor and the like for the second supporting member 2 are mainly disposed on the movable member 83.

The above-described configuration makes it possible to apply a combination of displacement due to the reciprocating motion of the second supporting member 2 and displacement due to the reciprocating motion of the movable member 83 to the covering material 100. For example, different vibration conditions, such as the amplitude and the frequency, can be set for the second supporting member 2 and the movable member 83. This enables reproduction of a situation in which complex displacement like a combination of a plurality of types of displacement occurs, thereby making it possible to conduct a more realistic test.

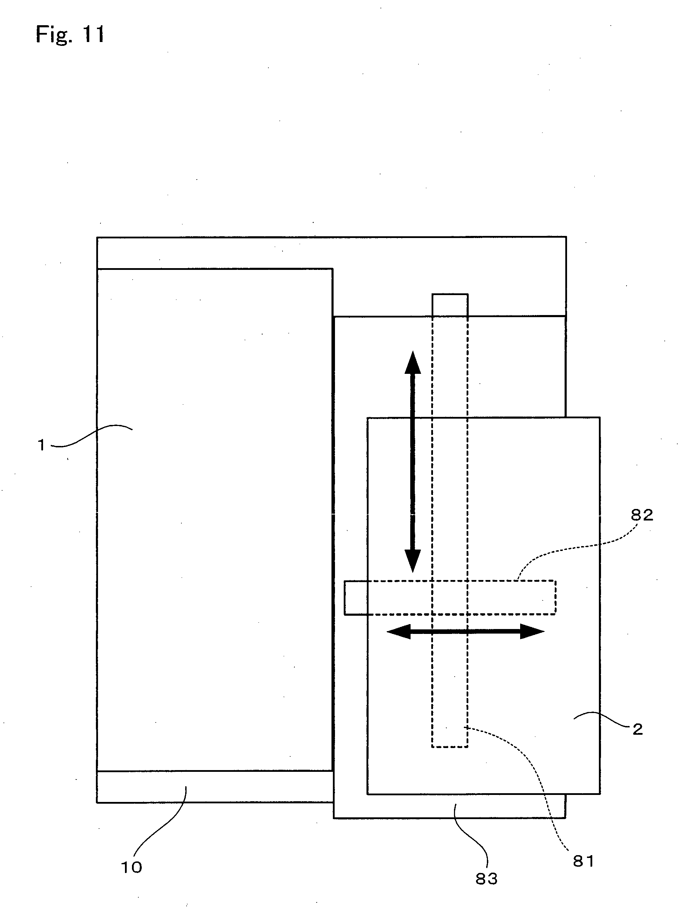

Although a configuration that produces two types of displacement is adopted in this example, a configuration that produces three or more types of displacement can also be adopted. That is to say, a configuration can be adopted in which a plurality of movable members are provided so that the movable members and the second supporting member 2 each independently reciprocate. Moreover, the movement direction of the movable member 83 and the movement direction of the second supporting member 2 are not necessarily required to be the same direction, and can also be set to be different from each other. For example, as shown in FIG. 11, the second rail 82 can be disposed in a direction orthogonal to the first rail 81 so that the second supporting member 2 moves in directions in which it approaches and separates from the first supporting member 1. In this manner, a combination of displacement in the shear direction and displacement in a tensile direction that is different from the shear direction can be applied to the covering material 100. Moreover, with this structure, the second supporting member 2 can move in a curved line as shown in FIG. 8, for example.

It should be noted that although the second supporting member 2 in this example is configured to move in the directions in which it approaches and separates from the first supporting member 1, since the second supporting member 2 moves along the first supporting member 1 together with the movable member 83, the second supporting member 2 consequently reciprocates relative to the first supporting member 1. Therefore, shear displacement is applied to the covering material 100, and thus the object of the present invention is achieved. Moreover, a configuration can also be adopted in which the second supporting member 2 is moved along the first supporting member 1, and the movable member 83 is moved in a direction that is orthogonal to the movement direction of the second supporting member 2. Furthermore, the intersection angle between the first rail 81 and the second rail 82 is not limited to the above-described right angles and can be changed to various angles.

### 5-6

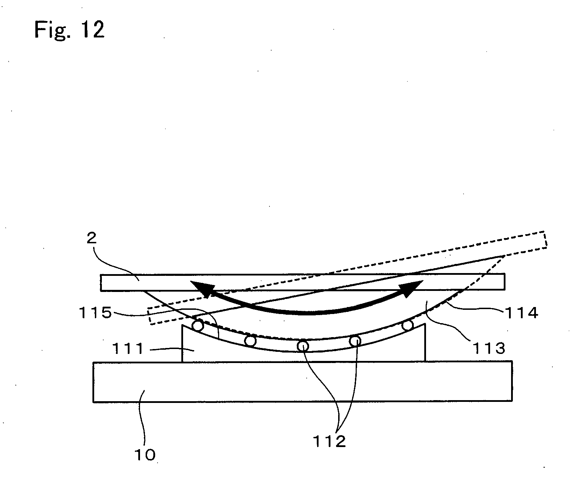

In the foregoing embodiment, the second supporting member 2 is configured to move in the same plane. However, the second supporting member 2 may also perform three-dimensional movement including movement in the vertical direction. For example, as shown in FIG. 12, a supporting platform 111 having a curved recess 115 in its upper surface is disposed on the base 10. The surface of this recess 115 is formed to have a circular-arc shape in cross section. Moreover, a plurality of rollers 112 are rotatably arranged along the surface of the recess 115, and the second supporting member 2 is disposed in such a manner as to abut against the rollers 112. A protruding portion 113 having a downwardly protruding curved surface 114 is provided on a bottom surface of this second supporting member 2 so as to come into contact with the rollers 112. This curved surface 114 is formed to have a circular-arc shape in cross section so as to conform to the above-described recess 115. With the above-described configuration, the protruding portion 113 provided on the second supporting member 2 reciprocates along the recess 115 via the rollers 112, and also oscillates in the vertical direction about the center of the radius of curvature of the recess 115. Therefore, displacement in which the oscillating motion in the vertical direction is added to the reciprocating motion in the shear direction along the first supporting member 1 can be applied to the covering material 100. It should be noted that the mechanism for applying such displacement is not particularly limited, and various configurations can be adopted.

### 5-7

In the foregoing embodiment, both of the supporting members 1 and 2 are disposed on the base 10. However, it is also possible, for example, to provide a rail on the first supporting member 1 and movably mount the second supporting member 2 to this rail, without using the base.

### 5-8

In the inspection method according to the foregoing embodiment, the covering material 100 attached to the backing boards 101 and 102 is used as the sample. That is to say, the covering material 100 is indirectly fixed to the installation surfaces 11 and 21. However, for example, it is also possible to directly attach the covering material 100 to the installation surfaces 11 and 21 of the inspection apparatus.

### 5-9

The method for fixing the backing boards to the installation surfaces 11 and 21 of the supporting members 1 and 2 is not particularly limited, and a known method such as a known clamp mechanism as well as the above-described fixing mechanism can be used as appropriate.

### 5-10

In the above-described embodiment, as shown in FIG. 2, the two supporting members 1 are 2 are adjacent to each other with a gap left therebetween. However, a configuration can also be adopted in which the supporting members 1 and 2 come into contact with each other without forming a gap therebetween. It should be noted that in the case where a gap is formed between the two supporting members, the gap is required to be such a gap that can allow practical shear displacement to be applied to the covering material. Moreover, forming a gap has the merit of positioning the joint between the two backing boards 101 and 102 becoming easier. Although the joint between the backing boards 101 and 102 is not necessarily required to be disposed at the position of the gap between the supporting members 1 and 2, if the joint is not disposed in this gap, then the joint is disposed on either one of the supporting members 1 and 2. In this state, the second supporting member 2 performs shear displacement while being subjected to frictional resistance from either one of the backing boards 101 and 102, and there is a possibility that the second supporting member 2 may fail to move smoothly.

### Examples

Hereinafter, examples of the present invention will be described. However, the present invention is not limited to the examples below.

The following gives a description of strength inspections with respect to laminated sheets composed of wallpaper in which a foamed resin layer is laminated on a fibrous base material, the strength inspections being conducted under two different conditions using the inspection apparatus described in the foregoing embodiment. In the inspections conducted under Conditions 1, laminated sheets of Examples 1 and 2 and Comparative Example 1 were used, and in the inspections conducted under Conditions 2, laminated sheets of Example 3 and Comparative Example 2 were used. In all of Examples 1 to 3 and Comparative Examples 1 and 2, general paper for wallpaper was used as the fibrous base material. On the other hand, with respect to the resin for the foamed resin layer, a polyethylene resin was used in Examples 1 and 3 , and an ethylene-vinyl acetate copolymer resin was used in Example 2. Also, a vinyl chloride resin was used in Comparative Examples 1 and 2.

The test conditions are as shown below.

**Table 1**

| | | Conditions 1 | | | Conditions 2 | |
|---|---|---|---|---|---|---|
| | | Ex. 1 | Ex. 2 | Com. Ex. 1 | Ex. 3 | Com. Ex. 2 |
| Size of test piece (mm) | Longitudinal *Vibrating direction | 40 | | | 80 | |
| | Lateral | 40 | | | 40 | |
| Period of vibration (sec.) | | 0.5 | | | 0.25 | |
| Amplitude of vibration (mm) | | 4.00 (±2.00) | | | 0.66 (±0.33) | |
| Test time (sec.) | | 15 | | | 3,600 | |

Test pieces of the laminated sheets used for the inspections were each attached to two gypsum boards having a length of 10 cm in the longitudinal direction, a length of 5 cm in the lateral direction, and a thickness of 9.5 mm, and were used in the inspections. At this time, each test piece was substantially equally bonded to upper surfaces of the two gypsum boards in a state in which the sides having a length of 10 cm of the two gypsum boards abutted against each other. With the thus prepared samples, the inspections were conducted under the above-described conditions using an observation method and evaluation criteria described below.

### Observation Method

The appearance of each sample was visually observed from the direction of 45 degrees and a distance of 50 cm with respect to a central portion of the sample.

### Evaluation Criteria

0: The sample for inspection completely ruptures, and as a result, the covering material is split into two sheets.
1: The rupture is obvious and impairs the design.
2: A slight rupture occurs at an end portion but is not problematic in terms of practical use.
3: Creases are obvious, but no rupture occurs.
4: Creases are locally observed but do not significantly impair the design.
5: Hardly any change occurs in appearance when compared with that before the inspection.

The results are shown below.

**Table 2**

| Ex. | Conditions 1 | | | Conditions 2 | |
|---|---|---|---|---|---|
| | Ex. 1 | Ex. 2 | Com. Ex. 1 | Ex. 3 | Com. Ex. 2 |
| Appearance after inspection | 3 | 3 | 0 | 4 | 0 |
| Time until rupture occurs | - | - | Less than one second after the test starts | - | Level 1 is reached before 30 seconds elapses after the test starts, and afterward, level 0 is reached. |

Consequently, it was confirmed that the laminated sheets in which the vinyl chloride resin was used as the foamed resin ruptured when subjected to shear displacement in the surface direction. Therefore, it was found that when vibration in the vertical direction such as that caused by an earthquake acts on backing boards, there is a risk that a laminated sheet like those of the comparative examples covering those backing boards may rupture. On the other hand, with respect to Examples 1 to 3, the occurrence of rupture was not confirmed with the above-described inspections. Therefore, it was found that the laminated sheets of Examples 1 to 3 are unlikely to rupture even when subjected to shear displacement due to an earthquake or the like, and thus the appearance and characteristics thereof are likely to be maintained.

### Reference Signs List

- 1: First supporting member

- 11: First installation surface
- 2: Second supporting member
- 21: Second installation surface
- 3: Driving portion

## Claims

1. An inspection method for inspecting strength of a covering material, the method comprising the steps of:
preparing a first supporting member having a first installation surface and a second supporting member having a second installation surface, the second supporting member being disposed such that the second installation surface is adjacent to the first installation surface;
directly or indirectly fixing the covering material to the first installation surface and the second installation surface in a state in which the covering material extends over both of the first installation surface and the second installation surface; and
reciprocating the second supporting member relative to the first supporting member in a state in which the first installation surface and the second installation surface are adjacent to each other.

2. The inspection method according to claim 1, wherein the first installation surface and the second installation surface are disposed so as to be coplanar.

3. The inspection method according to claim 1 or 2, wherein a moving distance in one direction of the reciprocating motion is 0.1 to 20 mm.

4. The inspection method according to any of claims 1 to 3, wherein a period of the reciprocating motion is 0.1 to 10 seconds.

5. The inspection method according to any of claims 1 to 4, further comprising the step of:
fixing the covering material to surfaces of a first supporting base board and a second supporting base board that are adjacent to each other in a state in which the covering material extends over both of the two supporting base boards,
wherein the covering material is indirectly fixed to the installation surfaces by installing the first supporting base board and the second supporting base board on the first installation surface and the second installation surface, respectively.

6. The inspection method according to any of claims 1 to 5, wherein the covering material is a laminated body including a foamed resin body or a foamed resin layer.

7. The inspection method according to any of claims 1 to 6, wherein the covering material is a sheet body.

8. The inspection method according to claim 7, wherein the sheet body is a laminated sheet having at least a resin layer on one surface of a base material.

9. A method for manufacturing a covering material, the method comprising the steps of:
forming the covering material;
collecting a portion of the formed covering material as a sample for inspection;
inspecting strength of the collected sample using the inspection method according to any of claims 1 to 8; and
certifying the covering material from which the sample satisfying a predetermined degree of strength is collected, as a product.

10. The method for manufacturing a covering material according to claim 9, wherein the step of forming the covering material comprises the step of:
forming a laminated body including a foamed resin body or a foamed resin layer.

11. The method for manufacturing a covering material according to claim 9 or 10, wherein the step of forming the covering material comprises the step of:
forming at least a resin layer on one surface of a base material.

12. An inspection apparatus for inspecting strength of a covering material, the inspection apparatus comprising:
a first supporting member having a first installation surface;
a second supporting member having a second installation surface, the second supporting member being disposed such that the second installation surface is adjacent to the first installation surface; and
a driving portion,
wherein the driving portion is configured to reciprocate the second supporting member relative to the first supporting member in a state in which the first installation surface and the second installation surface are adjacent to each other, and
the first installation surface and the second installation surface are configured such that the covering material is directly or indirectly fixed to the first installation surface and the second installation surface in a state in which the covering material extends over both of the first installation surface and the second installation surface.

13. The inspection apparatus according to claim 12, wherein the first installation surface and the second installation surface are disposed so as to be coplanar.

14. The inspection apparatus according to claim 12 or 13, wherein the driving portion is configured to reciprocate the second supporting member.

15. The inspection apparatus according to any of claims 12 to 14, wherein the driving portion is capable of adjusting a distance for which the second supporting member is reciprocated.

16. The inspection apparatus according to any of claims 12 to 15, wherein the driving portion is capable of adjusting a period at which the second supporting member is reciprocated.

17. The inspection apparatus according to any of claims 12 to 16, wherein the inspection apparatus is configured such that a range of the reciprocating motion of the second supporting member relative to the first supporting member is adjustable.

18. The inspection apparatus according to any of claims 12 to 17,
wherein the covering material is fixed to surfaces of a first base board and a second base board that are adjacent to each other in a state in which the covering material extends over both of the two base boards, and
the first installation surface and the second installation surface are configured such that the first base board and the second base board are detachably fixed to the first installation surface and the second installation surface, respectively.

19. A covering material manufactured using the manufacturing method according to any of claims 9 to 11.

20. A covering material having at least a resin layer on one surface of a base material,
wherein when the covering material having a 40 mm × 40 mm square shape is inspected using the inspection method according to claim 2 under conditions that a moving distance in one direction of the reciprocating motion is 4 mm, a period of the reciprocating motion is 0.5 seconds, and a time period for which the reciprocating motion is performed is 10 seconds, the covering material is not split.
